# FASCICULE DE BREVET EUROPEEN

(11) **EP 3 762 243 B1**
(45) Date de publication et mention de la délivrance du brevet: **04.05.2022**
(21) Numéro de dépôt: 19716964.2
(22) Date de dépôt: 06.03.2019
(51) Int. Cl.: B60C 15/06, B60C 23/04, B60C 9/02

(54) **PNEUMATIQUE EQUIPE D'UN MODULE DE COMMUNICATION RADIOFREQUENCE**
REIFEN MIT EINEM FUNKFREQUENZKOMMUNIKATIONSMODUL
TYRE PROVIDED WITH A RADIO FREQUENCY COMMUNICATION MODULE

(30) Priorité: 07.03.2018 FR 1851974
(43) Date de publication de la demande: 13.01.2021
(73) Titulaire: COMPAGNIE GENERALE DES ETABLISSEMENTS MICHELIN, 63000 Clermont-Ferrand (FR)
(72) Inventeur: CUKIERMAN, Florian, 63040 CLERMONT-FERRAND Cedex 9 (FR); HYE, Yann, 63040 CLERMONT-FERRAND Cedex 9 (FR)
(74) Mandataire: Roussy, Delphine
(86) Numéro de dépôt international: PCT/FR2019/050493
(87) Numéro de publication internationale: WO 2019/170998

(56) Documents cités:
- EP-A1- 1 977 912
- EP-A1- 2 186 658
- WO-A1-2012/030321
- WO-A1-2016/060851
- WO-A1-2016/193457
- FR-A1- 3 059 603

## Description

### Domaine de l'invention

La présente invention est relative aux pneumatiques, et plus particulièrement à un pneumatique équipé d'un module de communication radiofréquence.

### État de la technique

Elle s'applique en particulier, mais non exclusivement, à un pneumatique de véhicule automobile de type tourisme pour des véhicules puissants et rapides. Un tel pneumatique comprend généralement une armature de carcasse avec plus d'une nappe de carcasse, par exemple deux, avec des fils en matériau non métallique, par exemple en rayonne, nylon ou polyester.

On définira les directions axiale, radiale et circonférentielle d'un pneumatique relativement à l'axe de révolution de ce pneumatique.

On connaît déjà dans l'état de la technique, notamment d'après EP 2 186 658 A1, un pneumatique comprenant un module de communication radiofréquence. Dans ce document, le module de communication radiofréquence comprend un transpondeur à identification par radiofréquence passif muni de deux antennes formant dipôle. Ce type de transpondeur est généralement désigné par le sigle anglais RFID. Un tel organe peut stocker des données, par exemple relatives à l'identification au type et à la date de fabrication du pneumatique.

Le pneumatique décrit dans EP 2 186 658 A1, notamment illustré aux figures 7B et 9B, comprend un sommet, deux flancs et deux bourrelets avec un axe de révolution et une armature de carcasse avec deux nappes de carcasse ancrées chacune dans chaque bourrelet, chaque bourrelet comprenant une tringle, une partie de la première nappe de carcasse prolongée par un retournement autour de la tringle tel que l'extrémité du retournement est située axialement et radialement extérieurement relativement à la tringle, une gomme de bourrage disposée radialement extérieurement relativement à la tringle et axialement entre la première nappe de carcasse et le retournement, une partie de la deuxième nappe de carcasse disposée axialement extérieurement relativement à la première nappe de carcasse, à la gomme de bourrage et au retournement, une gomme de protection et une gomme de flanc axialement les plus extérieures.

Ce pneumatique est tel qu'il comprend un module de communication disposé axialement entre la gomme de bourrage et la gomme de flanc et à l'interface entre le retournement de la première nappe de carcasse et la gomme de bourrage.

Bien que le positionnement d'un tel module de communication est globalement bonne en terme de radiocommunication, elle présente des limites en terme de performance radiofréquence UHF sensible au métal, notamment lorsque les nappes carcasses sont constituées de fils métalliques. Mais même quand ceux-ci sont non métalliques, l'enfouissement du module de communication au sein du bourrelet, bien que propice à l'endurance du pneumatique et l'intégrité physique du module de communication, n'est pas propice à une excellente performance de radiocommunication.

L'invention a pour objectif de proposer une amélioration de la performance de radiocommunication UHF sans pour autant dégrader l'endurance du pneumatique.

### Description brève de l'invention

L'invention a pour objet un pneumatique similaire dans lequel une gomme de bourrage additionnelle est disposée axialement entre la deuxième nappe de carcasse et l'ensemble constitué par la gomme de protection et la gomme de flanc et dans lequel le module de communication est disposé à l'interface entre la deuxième nappe de carcasse et la gomme de bourrage additionnelle.

La demanderesse a constaté que la position axialement extérieure relativement à la deuxième nappe de carcasse permet de limiter les sollicitations subies par le module de communication par rapport à la position entre la gomme de bourrage et cette deuxième nappe de carcasse. Cette position a aussi l'avantage de limiter très fortement le risque de défaut, par exemple d'initiation et de propagation de fissures, lié à la présence du module de communication par rapport à une position axialement intérieure relativement à la deuxième nappe de carcasse. En effet, le fait de positionner la deuxième nappe carcasse en séparateur entre le module de communication et l'ensemble constitué de la gomme de bourrage et de la première nappe carcasse permet de créer une barrière physique entre le module de communication et les extrémités de la première nappe carcasse et du bourrage tringle. Ainsi on limite le risque de détérioration du pneumatique par l'insertion du module de communication à proximité de ces extrémités. Cette position est aussi favorable pour la qualité de communication du module de communication avec un lecteur extérieur. En effet, on éloigne le module de communication de zone métallique comme la tringle ou potentiellement métallique comme les première et deuxième nappes carcasses. Et cette position n'est pas néfaste à l'intégration physique du module de communication qui reste protégé des agressions provenant de l'extérieur du pneumatique, comme des coups de trottoir par exemple, par la gomme de bourrage additionnelle, la gomme de protection et le flanc. Enfin, reposer le module de communication sur la deuxième nappe carcasse permet de positionner facilement le module de communication par rapport à des détails structuraux du pneumatique comme les extrémités du retournement de la première nappe carcasse ou l'extrémité du bourrage tringle qui sont plus aisément repérables sur l'ébauche à cru du pneumatique à partir de la deuxième nappe carcasse qu'au travers d'une gomme épaisse comme la gomme de bourrage additionnelle. En effet, la première nappe carcasse et le bourrage tringle seront positionnés sur le tambour de confection du pneumatique avant la deuxième nappe carcasse, Une fois le module de communication disposé sur la deuxième nappe carcasse, on recouvre le tout de la gomme de bourrage additionnelle.

Dans un mode de réalisation spécifique, le retournement, d'une partie de la première nappe carcasse, ayant une extrémité située radialement inférieure à l'extrémité radialement extérieure de la gomme de bourrage, le module de communication est disposé radialement sensiblement au niveau de l'extrémité de la gomme de bourrage.

Dans cette configuration, il est préférable de positionner le module de communication radialement le plus extérieurement facilitant ainsi la performance de radiocommunication tout en préservant l'endurance du pneumatique et l'intégrité du module de communication. Pour l'intégrité physique du module de communication, celui-ci doit, dans la mesure du possible, se situer dans ou à proximité immédiate du bourrelet du pneumatique qui constitue une zone rigide du pneumatique. La présence de la deuxième nappe carcasse sur lequel s'appuie le module de communication permet de s'affranchir partiellement des inconvénients que représentent les extrémités du retournement de la première nappe carcasse ou du bourrage tringle.

De préférence, le module de communication radiofréquence comportant un transpondeur radiofréquence encapsulé dans une masse de gomme d'enrobage isolante électriquement et le transpondeur comportant une puce électronique couplée à une antenne rayonnante définissant un premier axe longitudinal, ce premier axe longitudinal est orienté circonférentiellement.

Selon un mode de réalisation particulier, cette masse de gomme d'enrobage peut être constituée par deux plaques de gomme prenant en sandwich le transpondeur radiofréquence.

C'est une façon simple et efficace d'enrober le transpondeur radiofréquence facilitant la manipulation du transpondeur radio fréquence. De ce fait son introduction au sein de l'ébauche à cru du pneumatique s'en trouve facilitée.

Selon un mode de réalisation préférentiel, le module en extension de la masse de gomme d'enrobage est inférieur ou égal au module en extension des mélanges caoutchouteux adjacents.

Ceci permet d'assurer une bonne endurance du pneumatique et l'intégrité physique du transpondeur radiofréquence en minimisant les contraintes aux alentours de l'introduction du module de communication au sein du pneumatique et faciliter la déformation de cette gomme d'enrobage au lieu de soumettre les composants du pneumatique à des efforts potentiellement sources de détérioration.

Selon un autre mode de réalisation préférentiel, la constante diélectrique relative de la masse d'enrobage est inférieure à la constante diélectrique relative des mélanges caoutchouteux adjacents.

Cette caractéristique permet d'améliorer la communication radiofréquence vers et à partir du transpondeur radiofréquence en minimisant les pertes énergétiques dans la gomme d'enrobage.

L'orientation du premier axe longitudinal est perpendiculaire aux fils des nappes de carcasse et est très favorable pour la tenue mécanique du transpondeur ainsi que pour la qualité de lecture du transducteur.

De préférence, le premier axe longitudinal du transpondeur radiofréquence est disposé radialement à une distance de l'extrémité radialement extérieure de la gomme de bourrage inférieure à 30 mm.

Très préférentiellement, cette distance est inférieure à 10 mm.

Positionner le module de communication par rapport et au niveau de l'extrémité radialement extérieure de la gomme de bourrage est avantageux industriellement car la mise en place du semi-fini du module de communication est aisée après avoir mis en place la deuxième nappe de carcasse et cette position radiale est déjà repérée.

Dans un premier mode de réalisation du transpondeur radiofréquence, l'antenne rayonnante du transpondeur radiofréquence comporte deux tronçons d'antennes hélicoïdales. La puce électronique est alors connectée galvaniquement aux deux tronçons d'antennes hélicoïdales.

Dans un second mode de réalisation du transpondeur radiofréquence, le transpondeur radiofréquence de l'organe électronique comprend en plus une antenne primaire connectée électriquement à la puce électronique, c'est à-dire galvaniquement. L'antenne primaire est couplée inductivement à l'antenne rayonnante qui est une antenne dipôle constituée d'un ressort hélicoïdal monobrin définissant le premier axe longitudinal.

Dans un mode de réalisation spécifique de ce second mode de réalisation du transpondeur radiofréquence, l'antenne primaire est une bobine ayant au moins une spire définissant un second axe longitudinal. La bobine est circonscrite dans un cylindre dont l'axe de révolution est parallèle au second axe longitudinal et dont le diamètre est compris entre le tiers et trois fois, de préférence entre la moitié et deux fois, le diamètre moyen du ressort hélicoïdal de l'antenne rayonnante.

Cette configuration permet d'assurer une performance de communication radiofréquence de qualité entre l'antenne primaire et l'antenne rayonnante ce qui permet d'avoir la performance de communication radiofréquence souhaitée au niveau du transpondeur radiofréquence lorsqu'il est situé au sein du pneumatique.

Dans un mode de réalisation particulier du second mode de réalisation du transpondeur radiofréquence, l'antenne rayonnante ayant une zone centrale entre deux zones latérales et l'antenne primaire ayant un plan médian perpendiculaire au deuxième axe longitudinale, les premier et deuxième axes longitudinaux sont parallèles entre eux et le plan médian de l'antenne primaire est disposé dans la zone centrale de l'antenne rayonnante.

Ce positionnement assure un couplage inductif de meilleure qualité puisque le champ magnétique est maximal au centre d'une bobine dans laquelle circule un courant électrique.

Dans un autre mode de réalisation particulier du second mode de réalisation du transpondeur radiofréquence, l'antenne primaire est disposée à l'intérieur du ressort hélicoïdal monobrin de l'antenne rayonnante.

Dans cette configuration, l'encombrement spatial du transpondeur radiofréquence est réduit, le module électronique devient un détail à l'échelle des dimensions du pneumatique ce qui garantit d'autant plus l'endurance du pneumatique.

### Description des Figures

Les différents objets de l'invention seront mieux compris au moyen de la description détaillée qui suit, conjointement avec les figures annexées sur lesquelles les mêmes numéros de référence désignent partout des parties identiques, et dans lesquelles :
- la figure 1 illustre en coupe axiale partielle un bourrelet de pneumatique conforme à l'invention ;
- la figure 2 présente un transpondeur radiofréquence usuel ;
- la figure 3 présente une vue éclatée schématique d'un module de communication ;
- la figure 4 présente une vue en perspective d'un transpondeur radiofréquence selon un mode de réalisation de l'invention dans une configuration où la partie électronique est située à l'intérieur de l'antenne rayonnante ;
- la figure 5 présente une vue en perspective d'un transpondeur radiofréquence selon l'invention dans une configuration où la partie électronique est située à l'extérieur de l'antenne rayonnante ; et
- la figure 6 présente une vue en perspective de la partie électronique d'un transpondeur radiofréquence dans une configuration où la partie électronique est située à l'intérieur de l'antenne rayonnante.

### Description détaillée de l'invention

Dans ce qui suit, les termes « gomme caoutchouteuse », « mélange caoutchouteux », « gomme » et « mélange » sont utilisés de façon équivalente pour identifier des constituants caoutchouteux du pneumatique.

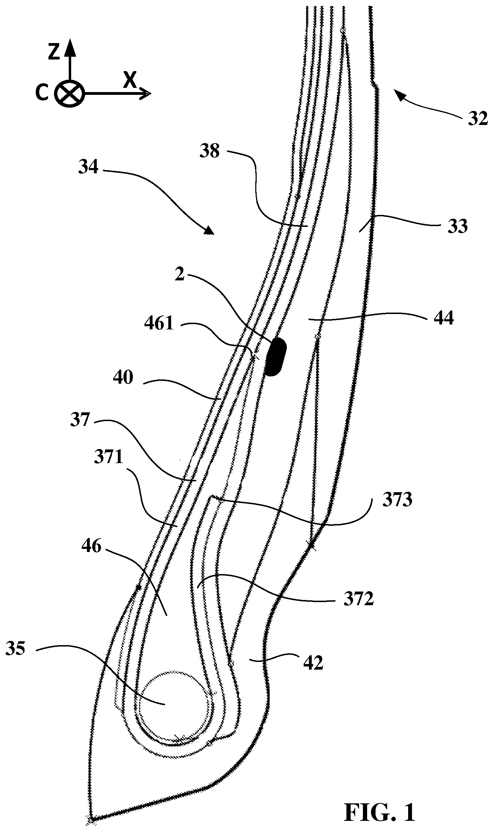

À la figure 1 sont indiquées les directions axiale X, circonférentielle C et radiale Z du bourrelet 34 d'un pneumatique conforme à l'invention.

En ce qui concerne la direction axiale, on entend par « axialement extérieur » une direction axiale dirigée vers l'extérieur du pneumatique et par « axialement intérieur » une direction axiale dirigée vers la cavité interne du pneumatique.

Un pneumatique comprend usuellement un sommet, deux flancs et deux bourrelets. Ne sont représentés à la figure 1 que la partie radialement intérieure du flanc 32 et le bourrelet 34. Le bourrelet 34 représenté à la figure 1 comprend une tringle de révolution 35, une première nappe de carcasse 37 avec une première partie 371 s'étendant du flanc 32 vers la tringle 35 prolongée par un retournement 372 enroulé autour de la tringle 35 et s'étendant radialement extérieurement jusqu'à une extrémité 373. Ce retournement 372 est disposé axialement vers l'extérieur du bourrelet 34 du pneumatique. Une gomme de bourrage 46 est disposée radialement extérieurement relativement à la tringle 35 et axialement entre la première partie 371 de la première nappe de carcasse 37 et le retournement 372. Cette gomme de bourrage 46 s'étend radialement extérieurement jusqu'à une extrémité 461. Il est à noter que l'extrémité 461 de la gomme de bourrage est située radialement extérieurement relativement à l'extrémité 373 du retournement 372.

Le bourrelet comprend aussi une deuxième nappe de carcasse 38 s'étendant du flanc 32 jusqu'à la tringle 35. Cette deuxième nappe de carcasse 38 est disposée axialement extérieurement relativement à la première nappe de carcasse 37, à la gomme de bourrage 46 et le retournement 372. Les deux nappes de carcasse 37 et 38 sont de manière connue en soi constituées de nappes renforcées par des câbles dits « radiaux », par exemple ici textiles, c'est-à-dire que ces câbles sont disposés pratiquement parallèles les uns aux autres et s'étendent d'un bourrelet à l'autre de manière à former un angle compris entre 80° et 90° avec le plan circonférentiel médian EP du pneumatique. Une couche de gomme intérieure étanche 40 (en anglais « inner liner ») s'étend d'un bourrelet à l'autre radialement intérieurement relativement à la première nappe de carcasse 37. Le bourrelet 34 comporte une gomme protectrice (ou « protecteur », en anglais « cushion gum ») 42 apte à être en contact avec la surface d'une jante. Cette gomme protectrice s'étend radialement extérieurement jusqu'à une interface avec une gomme de flanc 33. La gomme protectrice 42 et la gomme de flanc 33 constituent la couche extérieure du pneumatique. Le bourrelet 34 comporte aussi une gomme de bourrage additionnelle 44 disposée axialement entre la deuxième nappe de carcasse 38 d'une part, la gomme protectrice 42 et la gomme de flanc 33 d'autre part.

Le bourrelet 34 comporte aussi un module de communication radiofréquence 2 disposé axialement à l'interface entre la deuxième nappe de carcasse 38 et la gomme de bourrage additionnelle 44 et radialement entre l'extrémité 461 de la gomme de bourrage 46 et l'extrémité 372 du retournement 371 de la première nappe de carcasse.

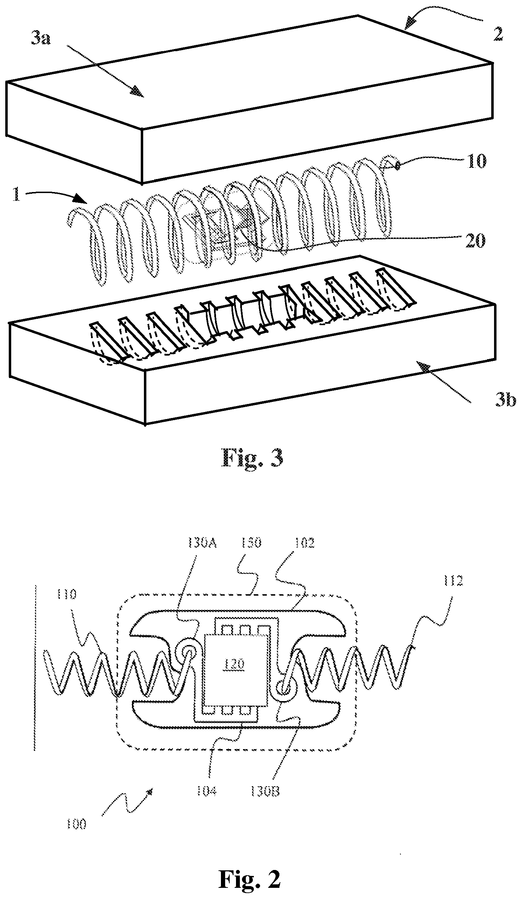

Comme l'indique la figure 2, un transpondeur radiofréquence usuel comporte une puce électronique couplée galvaniquement à une antenne rayonnante composée de deux demi-antennes hélicoïdales définissant un premier axe longitudinal. Dans le bourrelet du pneumatique, ce premier axe longitudinal défini par l'axe de l'antenne rayonnante est orienté circonférentiellement et donc perpendiculairement aux fils de renfort des deux nappes de carcasse. Cette orientation est très favorable pour la tenue mécanique du transpondeur radiofréquence ainsi que pour la qualité de communication avec un lecteur extérieur.

La figure 3 présente un éclaté d'un organe électronique 2. Cet organe 2 comprend un transpondeur radiofréquence 1 noyé entre deux couches 3a et 3b d'un mélange élastomère isolant électriquement non-vulcanisé. Un tel organe électronique est un produit semi-fini apte à être intégré dans la structure d'un pneumatique lors de la fabrication de celui-ci.

Le mélange élastomère d'enrobage contient 100 pce (parties pour 100 parties d'élastomère en masse) de polymère tel qu'EPDM (ethylene propylene diene monomer rubber), caoutchouc butyle, néoprène ou d'élastomère diénique tel que SBR (styrene-butadiene rubber), polybutadiène, caoutchouc naturel, ou polyisoprène.

Le mélange peut contenir des charges de type silice, noir de carbone, craie, kaolin :
- avec une charge de type silice à un taux maximum de 50 pce,
- avec une charge de type noir de carbone de grade ASTM supérieur à 700, à un taux inférieur à 50 pce ;
- avec une charge de type noir de carbone de grade inférieur ou égal à 500, a un taux maximum de 20 pce.
- il est possible d'ajouter ou de remplacer ces charges par de la craie ou du kaolin.

De tels taux et types de charges permettent de garantir une permittivité relative inférieure à 6.5, notamment à une fréquence de 915 MHz.

La rigidité à cuit du mélange d'enrobage est de préférence inférieure ou proche de celles des mélanges adjacents.

Dans un premier mode de réalisation, le transpondeur radiofréquence du module de communication 20 est un transpondeur radiofréquence usuel, tel que présenté à la figure 2 et décrit dans le document WO 2012/030321 A1. Ce transpondeur 100 comprend une puce électronique 120 fixée sur un support ou PCB (printed circuit board) 102 et galvaniquement connectée via les pistes conductrices 104 et les soudures 130 à deux demi-antennes 110 et 112. Les antennes sont des ressorts hélicoïdaux à âme en fil d'acier. La partie électronique et au moins une partie des antennes sont noyées dans un mélange caoutchouteux isolant 150 tel que précédemment décrit.

Le fil d'acier des antennes est revêtu d'une couche de conduction en cuivre, aluminium, argent, zinc, or ou laiton recouverte si nécessaire d'une couche d'isolation chimique par exemple en laiton, zinc, nickel ou étain pour protéger le mélange caoutchouteux du matériau de la couche de conduction.

La conduction électromagnétique d'une telle antenne s'effectue principalement par un effet de peau, c'est-à-dire qu'elle est principalement assurée dans les couches extérieures de l'antenne. Cette épaisseur de peau est notamment fonction de la fonction de la fréquence de rayonnement et du matériau constitutif de la couche de conduction. À titre d'exemple, pour une fréquence UHF (par exemple 915 MHz), l'épaisseur de peau est de l'ordre de 2,1 µm pour l'argent, 2,2 µm pour le cuivre, 4,4 µm pour le laiton.

Le fil d'acier peut être revêtu de ces couches puis mis en forme ; alternativement il peut aussi être mis en forme puis revêtu.

Le transpondeur radiofréquence 1 de l'organe électronique 2 tel que présenté à la figure 3 correspond à un deuxième mode de réalisation de l'organe électronique 2 qui va être décrit maintenant.

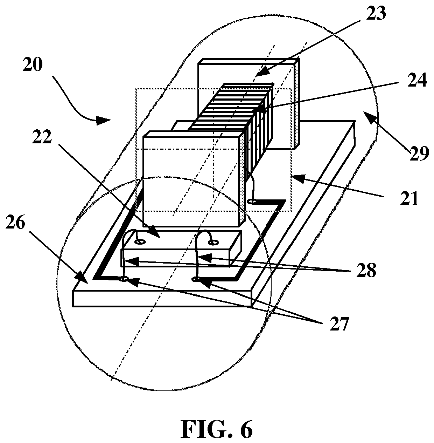

Le transpondeur radiofréquence 1 selon le deuxième mode de réalisation de l'organe électronique 2 comporte une partie électronique 20 et une antenne rayonnante 10 apte à communiquer avec un lecteur radiofréquence externe. La partie électronique 20 (voir figure 6) comprend une puce électronique 22. Il comprend en plus une antenne primaire 24 connectée électriquement à la puce électronique 22 et couplée inductivement à l'antenne rayonnante 10. L'antenne rayonnante est une antenne dipôle constituée d'un ressort hélicoïdal monobrin définissant un premier axe longitudinal.

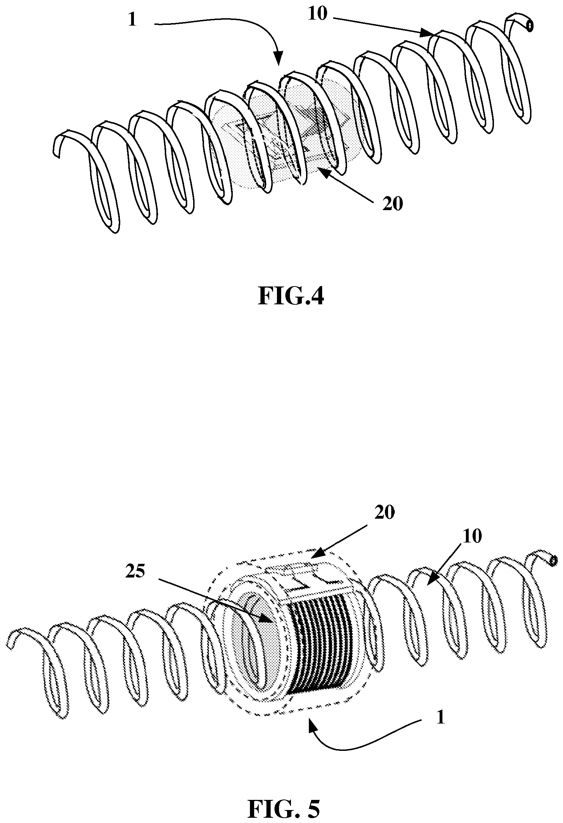

La figure 4 présente un transpondeur radiofréquence 1 dans une configuration où la partie électronique 20 est située à l'intérieur de l'antenne rayonnante 10. La forme géométrique de la partie électronique 10 est circonscrite dans un cylindre dont le diamètre est inférieur ou égal au diamètre intérieur du ressort hélicoïdal. L'enfilement de la partie électronique 20 dans l'antenne rayonnante 10 s'en trouve facilité. Le plan médian 21 de l'antenne primaire se trouve dans la zone centrale de l'antenne rayonnante et sensiblement superposé au plan médian de l'antenne rayonnante 10.

La figure 5 présente un transpondeur radiofréquence 1 dans une configuration où la partie électronique 20 se trouve à l'extérieur de l'antenne rayonnante 10. La forme géométrique de la partie électronique 20 présente une cavité cylindrique 25 dont le diamètre est supérieur ou égal au diamètre extérieur de l'antenne rayonnante 10. L'enfilement de l'antenne rayonnante 10 dans la cavité cylindrique 25 de la partie électronique s'en trouve ainsi facilité. Le plan médian 21 de l'antenne primaire se trouve dans la zone centrale de l'antenne rayonnante et sensiblement dans le plan médian de l'antenne rayonnante 10.

La figure 6 présente la partie électronique 20 d'un transpondeur radiofréquence 1 destiné à une configuration où la partie électronique 20 est située à l'intérieur de l'antenne rayonnante 10. La partie électronique 20 comprend une puce électronique 22 et une antenne primaire 24 connectée électriquement à la puce électronique 22 par l'intermédiaire d'un circuit imprimé 26. L'antenne primaire est ici constituée par une micro bobine CMS (acronyme de Composant Monté en Surface) présentant un axe de symétrie 23. On détermine le plan médian 21 de l'antenne primaire défini par une normale parallèle à l'axe de symétrie 23 de la bobine CMS et séparant la bobine en deux parties égales. La connexion électrique entre les composants sur le circuit imprimé est réalisée à l'aide de pistes en cuivre terminé par des pastilles 27 en cuivre. La connexion électrique des composants sur le circuit imprimé est réalisée à l'aide de la technique dite du « wire bonding » par des fils 28 en or entre le composant et les pastilles 27. L'ensemble constitué du circuit imprimé 26, de la puce électronique 22 de l'antenne primaire 24 est noyé dans une masse rigide 29 en résine époxy haute température isolante électriquement constituant la partie électronique 20 du transpondeur radiofréquence 1.

Ce transpondeur radiofréquence 1 a l'avantage d'être beaucoup plus résistant mécaniquement que les transpondeurs usuels.

## Revendications

1. Pneumatique comportant un sommet, deux flancs (32) et deux bourrelets (34) avec un axe de révolution et une armature de carcasse avec deux nappes de carcasse (37,38) ancrées chacune dans chaque bourrelet, (34) chaque bourrelet comprenant :
- une tringle (35) ;
- une partie de la première nappe de carcasse (371) prolongée par un retournement (372) autour de ladite tringle de ladite première nappe de carcasse tel que l'extrémité (373) dudit retournement est située axialement et radialement extérieurement relativement à ladite tringle ;
- une gomme de bourrage ( 46) disposée radialement extérieurement relativement à ladite tringle et axialement entre ladite première nappe de carcasse (371) et ledit retournement (372) ;
- une partie de la deuxième nappe de carcasse (38) disposée axialement extérieurement relativement à ladite première nappe de carcasse (37) , à ladite gomme de bourrage( 46) et audit retournement (372) ;
- une gomme de protection (42) et une gomme de flanc (33) axialement la plus extérieure ; et
- un module de communication (2, 20) comprenant un transpondeur radiofréquence (1, 100) avec une puce électronique (22, 120) et une antenne rayonnante hélicoïdale (10, 110, 120) ;
**caractérisé en ce qu'**une gomme de bourrage additionnelle ( 44) est disposée axialement entre la deuxième nappe de carcasse ( 38) d'une part et la gomme de protection ( 42) et la gomme flanc (33) d'autre part et **en ce que** le module de communication (2) est disposé à l'interface entre la deuxième nappe de carcasse (38) et ladite gomme de bourrage additionnelle (44).

2. Pneumatique selon la revendication 1, dans lequel, ledit retournement ( 372) ayant une extrémité (373) située radialement inférieure à l'extrémité (461) radialement extérieure de ladite gomme de bourrage (46), le module de communication (2) est disposé radialement sensiblement au niveau de l'extrémité (461) de ladite gomme de bourrage (46).

3. Pneumatique selon l'une des revendications 1 et 2, dans lequel, le transpondeur radiofréquence (1, 100) du module de communication (2) est disposé radialement à une distance inférieure à 30 mm de l'extrémité (461) radialement extérieure de ladite gomme de bourrage (46) .

4. Pneumatique selon la revendication 3, dans lequel le transpondeur radiofréquence (1, 100) du module de communication (2) est disposé à une distance inférieure à 10 mm de l'extrémité (461) radialement extérieure de ladite gomme de bourrage (46).

5. Pneumatique selon l'une quelconque des revendications précédentes, dans lequel, le module de communication (2) est constitué dudit transpondeur radiofréquence ( 1,100) encapsulé dans une masse de gomme d'enrobage (3a, 3b) isolante électriquement.

6. Pneumatique selon la revendication 5, dans lequel le transpondeur radiofréquence (1, 100) est pris en sandwich entre deux plaques de gomme (3a, 3b).

7. Pneumatique selon l'une quelconque des revendications 5 et 6, dans lequel le module en extension de la masse de gomme d'enrobage (3a, 3b) est inférieur ou égal au module en extension des mélanges caoutchouteux adjacents.

8. Pneumatique selon l'une des revendications 5 à 7, dans lequel la constante diélectrique relative de la masse de gomme d'enrobage (3a, 3b) est inférieure à la constante diélectrique relative des mélanges caoutchouteux adjacents.

9. Pneumatique selon l'une quelconque des revendications précédentes, dans lequel ladite antenne rayonnante hélicoïdale (10, 110, 120) du transpondeur radiofréquence (1, 100) définissant un premier axe longitudinal, ledit premier axe longitudinal est orienté circonférentiellement.

10. Pneumatique selon l'une quelconque des revendications précédentes, dans lequel, ladite antenne rayonnante comportant deux tronçons d'antennes hélicoïdales (110, 120), ladite puce électronique (120) est connectée galvaniquement audits deux tronçons d'antennes hélicoïdales (110, 120).

11. Pneumatique selon l'une des revendications 1 à 9, dans lequel le transpondeur radiofréquence (10) de l'organe électronique comprend en plus une antenne primaire (24) connectée électriquement à la puce électronique (22), dans lequel l'antenne primaire (24) est couplée inductivement à l'antenne rayonnante (10), et dans lequel l'antenne rayonnante (10) est une antenne dipôle constituée d'un ressort hélicoïdal monobrin définissant ledit premier axe longitudinal.

12. Pneumatique selon la revendication 11, dans lequel l'antenne primaire (24) est une bobine ayant au moins une spire définissant un deuxième axe longitudinal qui est circonscrite dans un cylindre dont l'axe de révolution est parallèle au deuxième axe longitudinal et dont le diamètre est compris entre le tiers et trois fois, de préférence entre la moitié et deux fois, le diamètre moyen du ressort hélicoïdal de l'antenne rayonnante (10) .

13. Pneumatique selon la revendication 12, dans lequel, l'antenne rayonnante (10) ayant une zone centrale entre deux zones latérales et l'antenne primaire (24) ayant un plan médian perpendiculaire au deuxième axe longitudinal, lesdits premier et deuxième axes longitudinaux sont parallèles entre eux et ledit plan médian de l'antenne primaire (24) est disposé dans la zone centrale de l'antenne rayonnante (10).

14. Pneumatique selon l'une quelconque des revendications 11 à 13, dans lequel l'antenne primaire (24) est disposée à l'intérieur du ressort hélicoïdal monobrin de l'antenne rayonnante (10).

## Patentansprüche

1. Luftreifen, der einen Scheitel, zwei Flanken (32) und zwei Wülste (34) mit einer Drehachse und eine Karkassenbewehrung mit zwei Karkassenlagen (37, 38) aufweist, die je in jedem Wulst (34) verankert sind, wobei jeder Wulst enthält:
- einen Wulstkern (35);
- einen Teil der ersten Karkassenlage (371) verlängert durch einen Umschlag (372) um den Wulstkern der ersten Karkassenlage derart, dass das Ende (373) des Umschlags sich bezüglich des Wulstkerns axial und radial außen befindet;
- einen Füllgummi (46), der radial außen bezüglich des Wulstkerns und axial zwischen der ersten Karkassenlage (371) und dem Umschlag (372) angeordnet ist;
- einen Teil der zweiten Karkassenlage (38) bezüglich der ersten Karkassenlage (37), des Füllgummis (46) und des Umschlags (372) axial außen angeordnet;
- einen Schutzgummi (42) und einen axial am weitesten außen liegenden Flankengummi (33); und
- ein Kommunikationsmodul (2, 20), das einen RF-Transponder (1, 100) mit einem Chip (22, 120) und eine strahlende Helixantenne (10, 110, 112) enthält;
**dadurch gekennzeichnet, dass** ein zusätzlicher Füllgummi (44) axial zwischen der zweiten Karkassenlage (38) einerseits und dem Schutzgummi (42) und dem Flankengummi (33) andererseits angeordnet ist, und dass das Kommunikationsmodul (2) an der Schnittstelle zwischen der zweiten Karkassenlage (38) und dem zusätzlichen Füllgummi (44) angeordnet ist.

2. Luftreifen nach Anspruch 1, wobei, da der Umschlag (372) ein Ende (373) hat, das sich radial unter dem radial äußeren Ende (461) des Füllgummis (46) befindet, das Kommunikationsmodul (2) radial im Wesentlichen im Bereich des Endes (461) des Füllgummis (46) angeordnet ist.

3. Luftreifen nach einem der Ansprüche 1 und 2, wobei der RF-Transponder (1, 100) des Kommunikationsmoduls (2) radial in einem Abstand von weniger als 30 mm vom radial äußeren Ende (461) des Füllgummis (46) angeordnet ist.

4. Luftreifen nach Anspruch 3, wobei der RF-Transponder (1, 100) des Kommunikationsmoduls (2) in einem Abstand von weniger als 10 mm vom radial äußeren Ende (461) des Füllgummis (46) angeordnet ist.

5. Luftreifen nach einem der vorhergehenden Ansprüche, wobei das Kommunikationsmodul (2) aus dem RF-Transponder (1, 100) besteht, der in einer Masse von elektrisch isolierendem Umhüllungsgummi (3a, 3b) eingekapselt ist.

6. Luftreifen nach Anspruch 5, wobei der RF-Transponder (1, 100) sandwichartig zwischen zwei Gummiplatten (3a, 3b) eingeklemmt ist.

7. Luftreifen nach einem der Ansprüche 5 und 6, wobei der Dehnungsmodul der Masse von Umhüllungsgummi (3a, 3b) geringer als der oder gleich dem Dehnungsmodul der benachbarten Kautschukmischungen ist.

8. Luftreifen nach einem der Ansprüche 5 bis 7, wobei die relative Dielektrizitätskonstante der Masse von Umhüllungsgummi (3a, 3b) geringer als die relative Dielektrizitätskonstante der benachbarten Kautschukmischungen ist.

9. Luftreifen nach einem der vorhergehenden Ansprüche, wobei, da die strahlende Helixantenne (10, 110, 112) des RF-Transponders (1, 100) eine erste Längsachse definiert, die erste Längsachse in Umfangsrichtung ausgerichtet ist.

10. Luftreifen nach einem der vorhergehenden Ansprüche, wobei, da die strahlende Antenne zwei Helixantennenabschnitte (110, 112) aufweist, der Chip (120) galvanisch mit den zwei Helixantennenabschnitten (110, 120) verbunden ist.

11. Luftreifen nach einem der Ansprüche 1 bis 9, wobei der RF-Transponder (10) des elektronischen Organs zusätzlich eine Primärantenne (24) enthält, die elektrisch mit dem Chip (22) verbunden ist, wobei die Primärantenne (24) induktiv mit der strahlenden Antenne (10) gekoppelt ist, und wobei die strahlende Antenne (10) eine Dipolantenne ist, die aus einer Eindraht-Schraubenfeder besteht, die die erste Längsachse definiert.

12. Luftreifen nach Anspruch 11, wobei die Primärantenne (24) eine Spule ist, die mindestens eine Windung hat, die eine zweite Längsachse definiert, die von einem Zylinder umgeben ist, dessen Drehachse parallel zur zweiten Längsachse ist und dessen Durchmesser zwischen dem Drittel und dem Dreifachen, vorzugsweise zwischen der Hälfte und dem Zweifachen, des mittleren Durchmessers der Schraubenfeder der strahlenden Antenne (10) liegt.

13. Luftreifen nach Anspruch 12, wobei, da die strahlende Antenne (10) einen zentralen Bereich zwischen zwei seitlichen Bereichen hat und die Primärantenne (24) eine Mittelebene lotrecht zur zweiten Längsachse hat, die ersten und zweiten Längsachsen zueinander parallel sind und die Mittelebene der Primärantenne (24) im zentralen Bereich der strahlenden Antenne (10) angeordnet ist.

14. Luftreifen nach einem der Ansprüche 11 bis 13, wobei die Primärantenne (24) im Inneren der Eindraht-Schraubenfeder der strahlenden Antenne (10) angeordnet ist.

## Claims

1. Tyre comprising a crown, two sidewalls (32) and two beads (34) with an axis of revolution and a carcass reinforcement with two carcass plies (37, 38) each anchored in each bead (34), each bead comprising:
- a bead wire (35);
- a part of the first carcass ply (371) extended by a turn-up (372) around said bead wire of said first carcass ply such that the end (373) of said turn-up is situated axially and radially on the outside relative to said bead wire;
- a filler (46) arranged radially on the outside relative to said bead wire and axially between said first carcass ply (371) and said turn-up (372);
- a part of the second carcass ply arranged axially on the outside relative to said first carcass ply, to said filler and to said turn-up;
- a protective rubber ((42) cushion gum) and a sidewall rubber (33) axially furthest towards the outside; and
- a communication module (2, 20) comprising a radiofrequency transponder (1, 100) with an electronic chip (22, 120) and a helical radiating antenna (10, 110, 112);
**characterized in that** an additional filler (44) is positioned axially between the second carcass ply (38) on the one hand, and the cushion gum (42) and the sidewall rubber (33) on the other, and **in that** the communication module (2) is positioned at the interface between the second carcass ply (38) and said additional filler (44).

2. Tyre according to Claim 1, wherein, with said turn-up (372) having an end (373) situated radially below the radially outer end (461) of said filler (46), the communication module (2) is positioned radially substantially at the level of the end (461) of said filler (46).

3. Tyre according to one of Claims 1 and 2, wherein the radiofrequency transponder (1, 100) of the communication module (2) is positioned radially at a distance less than 30 mm from the radially outer end (461) of said filler (46).

4. Tyre according to Claim 3, wherein the radiofrequency transponder (1, 100) of the communication module (2) is positioned at a distance less than 10 mm from the radially outer end (461) of said filler (46).

5. Tyre according to any one of the preceding claims, wherein the communication module 2) consists of said radiofrequency transponder (1, 100) encapsulated in an electrically insulating encapsulating rubber mass (3a, 3b).

6. Tyre according to Claim 5, wherein the radiofrequency transponder (1, 100) is sandwiched between two sheets of rubber (3a, 3b).

7. Tyre according to either one of Claims 5 and 6, wherein the tensile elastic modulus of the encapsulating rubber mass (3a, 3b) is lower than or equal to the tensile elastic modulus of the adjacent rubber compounds.

8. Tyre according to one of Claims 5 to 7, wherein the relative dielectric constant of the encapsulating rubber mass (3a, 3b) is lower than the relative dielectric constant of the adjacent rubber compounds.

9. Tyre according to any one of the preceding claims, wherein, with said helical radiating antenna (10, 110, 112) of the radiofrequency transponder (1, 100) defining a first longitudinal axis, said first longitudinal axis is oriented circumferentially.

10. Tyre according to any one of the preceding claims, wherein, with said radiating antenna comprising two helical antenna segments (110, 112), said electronic chip (120) is galvanically connected to said two helical antenna segments (110, 112).

11. Tyre according to one of Claims 1 to 9, wherein the radiofrequency transponder (10) of the electronic member in addition comprises a primary antenna (24) electrically connected to the electronic chip (22) , wherein the primary antenna (24) is inductively coupled to the radiating antenna (10), and wherein the radiating antenna (10) is a dipole antenna consisting of a single-strand helical spring defining said first longitudinal axis.

12. Tyre according to Claim 11, wherein the primary antenna (24) is a coil having at least one turn defining a second longitudinal axis that is circumscribed by a cylinder the axis of revolution of which is parallel to the second longitudinal axis and the diameter of which is between one third and three times, and preferably between half and two times, the average diameter of the helical spring of the radiating antenna (10).

13. Tyre according to Claim 12, wherein, with the radiating antenna (10) having a central region between two lateral regions and the primary antenna (24) having a median plane perpendicular to the second longitudinal axis, said first and second longitudinal axes are parallel to one another and said median plane of the primary antenna (24) is arranged in the central region of the radiating antenna (10).

14. Tyre according to any one of Claims 11 to 13, wherein the primary antenna (24) is placed inside the single-strand helical spring of the radiating antenna (10).
